# EUROPÄISCHE PATENTSCHRIFT

(11) **EP 3 002 146 B1**
(45) Veröffentlichungstag und Bekanntmachung des Hinweises auf die Patenterteilung: **19.04.2017**
(21) Anmeldenummer: 15182021.4
(22) Anmeldetag: 21.08.2015
(51) Int. Cl.: B60K 17/04, F16H 63/30, F16H 47/02

(54) **GETRIEBEANORDNUNG**
TRANSMISSION ASSEMBLY
SYSTEME DE TRANSMISSION

(30) Priorität: 26.09.2014 DE 102014113960
(43) Veröffentlichungstag der Anmeldung: 06.04.2016
(73) Patentinhaber: CLAAS Industrietechnik GmbH, 33106 Paderborn (DE)
(72) Erfinder: Stember, Tobias, 33142 Büren (DE); Minartz, Lars, 33607 Bielefeld (DE); Reisch, Johann, 87616 Marktoberdorf (DE); Kuhnen, Matthias, 87662 Osterzell (DE)
(74) Vertreter: Budach, Steffen

(56) Entgegenhaltungen:
- EP-A1- 0 140 046
- EP-A1- 0 306 780
- DE-A1-102006 038 093

## Beschreibung

Die Erfindung betrifft eine Getriebeanordnung gemäß dem Oberbegriff des Anspruchs 1.

Kommunale Nutzfahrzeuge, insbesondere sogenannte Transportgeräteträger werden unter anderem bei der Straßenreinigung, bei der Grünflächenpflege oder im Winterdienst eingesetzt. Zahlreiche weitere Einsatzmöglichkeiten sind bekannt. Derartige Nutzfahrzeuge werden in sich deutlich unterscheidenden Fahrgeschwindigkeitsbereichen betrieben. Während einerseits beim eigentlichen Arbeitseinsatz (z.B. Straßenreinigung) üblicherweise mit verhältnismäßig niedriger Geschwindigkeit gefahren wird, ist es für das Zurücklegen von Fahr- bzw. Transportstrecken - insbesondere um mit dem Fahrzeug zu einem Einsatzort zu gelangen - wünschenswert, das Nutzfahrzeug mit einer demgegenüber verhältnismäßig hohen Geschwindigkeit zu fahren, insbesondere im Geschwindigkeitsbereich des allgemeinen Straßenverkehrs. Es bestehen somit besondere Anforderungen an den Fahrantrieb derartiger Nutzfahrzeuge.

Dabei weisen Nutzfahrzeuge mit einem rein hydrostatischen Antrieb prinzipiell den Vorteil auf, dass sich deren Fahrgeschwindigkeit stufenlos ändern lässt. Dies steigert insbesondere bei langsamer Fahrt (also während des Arbeitseinsatzes) den Fahrkomfort. Andererseits weist der hydrostatische Antrieb in hohen Geschwindigkeitsbereichen den Nachteil eines geringen Wirkungsgrades auf.

Hingegen sind bei Nutzfahrzeugen mit einem rein mechanischen Antrieb diese Vor- und Nachteile umgekehrt gelagert. So weisen letztere Nutzfahrzeuge im hohen Geschwindigkeitsbereich zwar einen verhältnismäßig hohen Wirkungsgrad auf. Jedoch kann im niedrigen Geschwindigkeitsbereich die Fahrgeschwindigkeit nur bedingt stufenlos angepasst werden.

Aus der EP 0 306 780 A1 ist ein Triebwerk für Nutzfahrzeuge mit einem mechanischen Fahrantrieb für zwei Fahrtrichtungen bestehend aus einer Brennkraftmaschine, einer im Leistungsfluß zu den angetriebenen Rädern angeordneten Fahrkupplung und einem der Fahrkupplung nachgeschalteten mehrstufigen Schaltgetriebe mit einer eine Vielzahl die verschiedenen Fahrgeschwindigkeitsstufen bekannt. Das Triebwerk weist einen hydrostatischen Fahrantrieb auf, welcher aus einer unter Umgehung der Fahrkupplung angetriebenen Hydraulikpumpe und einem von der Hydraulikpumpe angetriebenen Hydraulikmotor besteht, wobei eine Ausgangswelle des Schaltgetriebes in mehreren Fahrgeschwindigkeitsstufen wahlweise über die Fahrkupplung oder den Hydraulikmotor antreibbar ist.

Aus DE 10 2006 038 093 A1 ist eine Getriebeanordnung für den Fahrantrieb eines kommunalen Nutzfahrzeugs bekannt, bei welcher ein herkömmliches mehrstufiges Schaltgetriebe mit verhältnismäßig geringem baulichen Aufwand zu einer mechanischhydraulischen Getriebeanordnung umgerüstet ist. Dabei werden die Eingangs- und die Ausgangswelle des mechanischen Schaltgetriebes zur Bildung eines parallelen hydraulischen Getriebezweigs über hydraulische Getriebekomponenten (Pumpe, Motor) miteinander verbunden. Die Getriebeanordnung ist in einem mechanischen und in einem hydraulischen Betriebsmodus betreibbar, so dass sich je nach Einsatzzweck ein gewünschter Betriebsmodus wählen lässt.

Bei der Getriebeanordnung gemäß DE 10 2006 038 093 A1 umfasst der Antriebsstrang vom Getriebeeingang (Hauptmotor) zum Getriebeausgang (Achsantrieb) immer - d.h. unabhängig vom gewählten Betriebsmodus - die Eingangswelle und die Ausgangswelle des Schaltgetriebes. Insbesondere treibt auch im hydraulischen Betriebsmodus der Hydromotor die Ausgangswelle des Schaltgetriebes an. Dieser Zwangsantrieb führt zu Antriebsverlusten bei hydraulischem Fahrbetrieb. Zudem muss für den hydraulischen Betriebsmodus - beispielsweise durch Vorsehen einer gesonderten Schaltsperre - sichergestellt werden, dass das Schaltgetriebe in Neutralstellung steht, da sonst eine Beschädigung gegeneinander arbeitender Antriebskomponenten stattfinden kann.

Es ist eine Aufgabe der vorliegenden Erfindung eine Getriebeanordnung gemäß dem Oberbegriff des Anspruchs 1 anzugeben, die einen erhöhten Wirkungsgrad zumindest im hydraulischen Betriebsmodus aufweist und bei der Fehlschaltungen, insbesondere ein Zusammenschalten beider Getriebezweige vermieden werden.

Die Aufgabe wird gelöst durch eine Getriebeanordnung mit den Merkmalen des Anspruchs 1. Diese zeichnet sich aus durch eine Kupplungsanordnung, mit der sich ausschließlich entweder eine Abtriebswelle des mechanischen Getriebezweigs oder eine Abtriebswelle des hydraulischen Getriebezweigs mit dem Getriebeausgang in Antriebsverbindung bringen lässt. Die Kupplungsanordnung ist somit derart gestaltet, dass die Abtriebswelle des Schaltgetriebes nur bei gewähltem mechanischem Betrieb angetrieben wird. Wird die Getriebeanordnung über den hydraulischen Getriebezweig betrieben, so besteht ausschließlich zwischen Abtriebswelle des hydraulischen Getriebezweigs und dem Getriebeausgang eine Antriebsverbindung. Auf vorteilhafte Weise treibt der hydraulische Getriebezweig somit die Abtriebswelle des mechanischen Schaltgetriebes nicht unnötig an, sondern ist von dieser mechanisch entkoppelt. Die Kupplungsanordnung übernimmt somit die Funktion einer exklusiven Wahlschaltung. Die Effizienz der Übertragung von Antriebsleistung im Hydraulikbetrieb ist dadurch gesteigert gegenüber der Lösung aus DE 10 2006 038 093 A1. Indem die Kupplungsanordnung erfindungsgemäß ein exklusives Schalten zwischen den Getriebezweigen durchführt, ist daneben auf vorteilhafte Weise ein sicherer Betrieb der Getriebeanordnung ohne zusätzliche Vorkehrungen gewährleistet.

Gemäß einer vorteilhaften Weiterbildung der Getriebeanordnung umfasst die Kupplungsanordnung eine der Abtriebswelle des mechanischen Getriebezweigs zugeordnete Kupplung und eine der Abtriebswelle des hydraulischen Getriebezweigs zugeordnete Kupplung, wobei sich die Kupplungen gemeinsam betätigen lassen. Zweckmäßigerweise erfolgt eine solche gemeinsame Betätigung jeweils mit entgegengesetzter Wirkung, indem die eine Kupplung geöffnet und die andere Kupplung geschlossen wird (und umgekehrt). Vorteilhaft werden so durch eine einzige Betätigung - beispielsweise verursacht durch einen einzigen Aktor - zwei Schaltvorgänge ausgelöst.

Eine konstruktive Ausgestaltung sieht vor, dass den Kupplungen eine gemeinsame Betätigungseinrichtung, insbesondere eine zwischen zwei Positionen verschiebbare Doppelschaltgabel zugeordnet ist, wobei in einer ersten Position der Betätigungseinrichtung die Kupplung des hydraulischen Getriebezweigs geschlossen und die Kupplung des mechanischen Getriebezweigs geöffnet ist. Hingegen ist in einer zweiten Position der Betätigungseinrichtung die Kupplung des hydraulischen Getriebezweigs geöffnet und die Kupplung des mechanischen Getriebezweigs ist geschlossen. Auf derartige Weise ist mit mechanischen Mitteln eine Exklusivschaltung verwirklicht, die eine Fehlschaltung innerhalb der Getriebeanordnung wirksam und einfach - ohne Zuhilfenahme einer wie auch immer gearteten Sperreinrichtung - verhindert.

Für eine wie zuvor beschriebene mechanische Exklusivschaltung sind grundsätzlich verschiedene konstruktive Gestaltungen denkbar. Eine baulich kompakte und für den Einsatzzweck an Transportgeräteträgern besonders geeignete Ausgestaltung sieht vor, dass eine über den mechanischen Antriebszweig antreibbare Welle und eine über den hydraulischen Antriebszweig antreibbare Welle parallel zueinander angeordnet sind, wobei die gemeinsame Betätigungseinrichtung bezogen auf die Wellen in axialer Richtung verschiebbar ist, um mittels an der Betätigungseinrichtung angeordneter Eingriffselemente eine formschlüssige Verbindung zwischen entweder der Welle des mechanischen Getriebezweigs und dem Getriebeabtrieb, oder der Welle des hydraulischen Getriebezweigs und dem Getriebeabtrieb herzustellen.

Vorzugsweise handelt es sich bei einem Eingriffselement jeweils um eine axial verschiebbare Schaltmuffe, mit der sich eine formschlüssige Verbindung zwischen einem drehfest auf der jeweiligen Welle angeordneten Rad und einem dazu koaxialen Zahnrad, das mit dem Getriebeabtrieb antriebsverbunden ist, herstellen lässt. Eine axial verschiebbare Schaltmuffe zur Herstellung einer Verbindung zwischen zu kuppelnden Rädern bietet aufgrund des erzielbaren Formschlusses den Vorteil einer verlustfreien Leistungsübertragung im geschalteten Zustand.

Die Getriebeanordnung lässt sich für unterschiedliche Anwendungen einsetzen. Zweckmäßigerweise ist dabei das mechanische Schaltgetriebe in eine Vielzahl von Gangstufen mit unterschiedlicher Übersetzung schaltbar, während das hydraulische Getriebe eine stufenlos veränderliche Übersetzung aufweist. Vorteilhaft kommt dabei das hydraulische Getriebe insbesondere für niedrigere Abtriebsdrehzahlen der Getriebeanordnung zum Einsatz, während das mechanische Getriebe insbesondere für höhere Abtriebsdrehzahlen der Getriebeanordnung zum Einsatz kommt.

Eine besonders an die bauräumlichen Gegebenheiten an insbesondere kommunalen Nutzfahrzeugen angepasste Gestaltung ergibt sich, indem die Getriebeanordnung im Wesentlichen durch zwei baulich voneinander entkoppelte Einheiten gebildet wird. Dabei nimmt bevorzugt eine erste bauliche Einheit das Schaltgetriebe sowie eine Hydropumpe auf, während eine zweite Einheit die Kupplungsanordnung, einen mit der Hydropumpe antriebsverbundenen Hydromotor sowie zumindest ein Zahnrad des Getriebeausgangs aufnimmt, das entweder über Wellen mit einer Ausgangswelle des Schaltgetriebes oder über Wellen mit dem Hydromotor in Antriebsverbindung bringbar ist. Durch die bauliche Entkopplung besteht der Vorteil einer - zumindest in gewissen Grenzen - unabhängigen Anordnung der beiden Einheiten.

Eine erweiterte Funktionalität der Getriebeanordnung wird erzielt, indem sich dem hydraulischen Getriebezweig ein Kriechganggetriebe zuschalten lässt, das eine an der Abtriebswelle des Hydromotors anliegende Drehzahl im zugeschalteten Zustand auf eine demgegenüber verringerte Drehzahl einer Ausgangswelle reduziert. Durch Zuschalten des Kriechganggetriebes kann somit eine ohnehin bei hydraulischem Betrieb verhältnismäßig niedrige Abtriebsdrehzahl der Getriebeanordnung abermals gesenkt werden, was für bestimmte Einsatzwecke vorteilhaft sein kann.

In konstruktiver Hinsicht ist das Kriechganggetriebe vorteilhaft als eine montagefähige Baueinheit ausgeführt, an die der Hydromotor anbaubar ist und die sich an ein die Kupplungsanordnung zumindest teilweise aufnehmendes Gehäuseelement anbauen lässt, um Teil der zweiten baulichen Einheit zu sein.

Neben einer wie zuvor beschriebenen Getriebeanordnung betrifft die Erfindung weiterhin ein kommunales oder landwirtschaftliches Nutzfahrzeug mit einem Fahrantriebsstrang, der eine wie zuvor beschriebene Getriebeanordnung aufweist.

Die Erfindung wird nachfolgend anhand einer Zeichnung näher erläutert. Aus der Erläuterung ergeben sich auch weitere vorteilhafte Wirkungen der beanspruchten Erfindung. In der Zeichnung zeigt:
- Fig. 1: eine schematische Ansicht des Fahrantriebs eines kommunalen Nutzfahrzeugs,
- Fig. 2: eine Schnittdarstellung eines für die Erfindung wesentlichen Teils einer Getriebeanordnung.

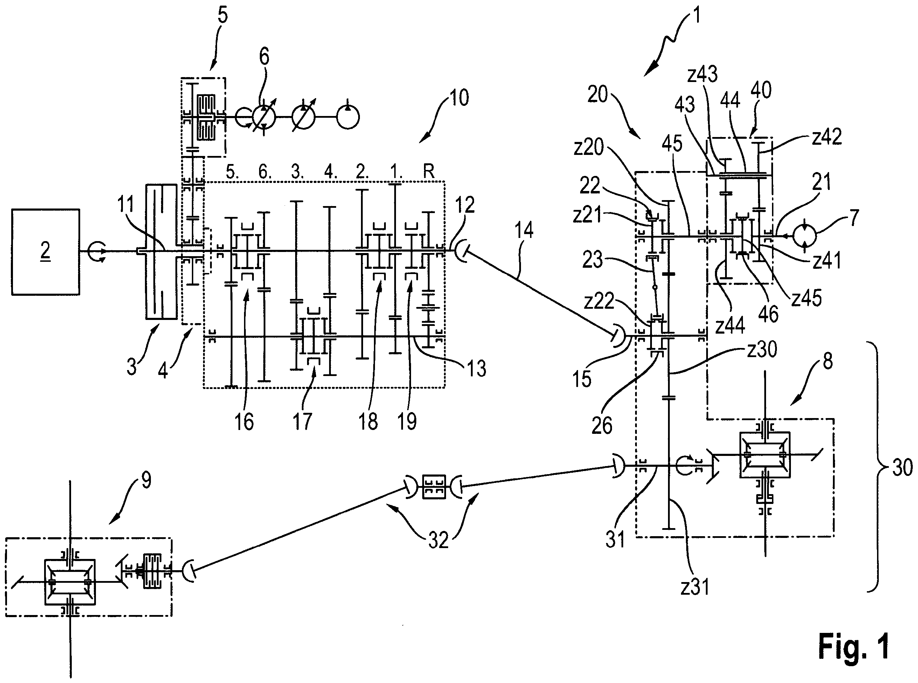

In Fig. 1 ist in einer schematischen Ansicht das Funktionsprinzip des Fahrantriebs eines kommunalen Nutzfahrzeugs, insbesondere eines sogenannten Transportgeräteträgers gezeigt. Dabei stellt ein Antriebsmotor 2, bevorzugt ein Verbrennungsmotor, eine Antriebsleistung bereit, die über eine Hauptkupplung 3 auf eine Eingangswelle 11 übertragen wird. Die Eingangswelle 11 stellt den Getriebeeingang einer Getriebeanordnung 1 dar.

Die Getriebeanordnung 1 weist auf nachfolgend näher zu erläuternde Weise einen mechanischen Getriebezweig mit einem mechanischen Schaltgetriebe 10, einen hydraulischen Getriebezweig mit einem hydraulischen Getriebe 6, 7 und einem Kriechganggetriebe 40 sowie einen Getriebeausgang in Form einer Getriebeausgangswelle 31 auf. Zur Herstellung eines Antriebszustands innerhalb der Getriebeanordnung 1 ist der Getriebeeingang 11 mit der Getriebeausgangswelle 31 wahlweise entweder über den mechanischen Getriebezweig oder über den hydraulischen Getriebezweig in Antriebsverbindung bringbar.

Die Getriebeausgangswelle 31 ist Teil eines Radantriebs 30 des (nicht näher gezeigten) Nutzfahrzeugs. Im gezeigten Ausführungsbeispiel ist die Getriebeausgangswelle 31 dazu über eine Gelenkwellenanordnung 32 mit einem Vorderachsgetriebe 9 antriebsverbunden, um eine Vorderachse (des Nutzfahrzeugs) anzutreiben. Eine dem Vorderachsgetriebe 9 zugeordnete Kupplung ermöglicht bedarfsweise ein Zu- oder Abschalten des Vorderachsantriebs. Die Getriebeausgangswelle 31 ist zudem über eine (nicht näher bezeichnete) Kegelradstufe mit einem Hinterachsgetriebe 8 antriebsverbunden, um eine Hinterachse des Nutzfahrzeugs anzutreiben. Das Hinterachsgetriebe 8 verfügt - auf für sich bekannte und daher nicht näher zu erläuternde Weise - über eine Differentialsperre zur bedarfsweisen Sperrung der Hinterachse.

In einem Antriebszustand treibt der Antriebsmotor 2 über die Hauptkupplung 3 die Getriebeeingangswelle 11 der Getriebeanordnung 1 an. Abhängig vom Schaltzustand der Getriebeanordnung 1 wird die bereitgestellte Antriebsleistung entweder über den hydraulischen oder über den mechanischen Getriebezweig auf die Getriebeausgangswelle 31 übertragen, um von dort das Hinterachsgetriebe 8 und das Vorderachsgetriebe 9 (sofern zugeschaltet) anzutreiben und somit das Nutzfahrzeug in Fahrt zu versetzen.

Wie in Fig. 1 zu sehen, wird die Getriebeanordnung 1 im Wesentlichen durch zwei baulich voneinander entkoppelte Einheiten gebildet, wobei eine erste Einheit das Schaltgetriebe 10, die Hauptkupplung 3, ein Verteilgetriebe 4, eine Kupplung 5 sowie eine Hydropumpe 6 aufnimmt. Eine zweite Einheit (Vorgelegegetriebe 20) nimmt eine Kupplungsanordnung 22, z20, z21, 23, 26, z22, z30, einen mit der Hydropumpe 6 antriebsverbundenen Hydromotor 7 sowie ein lösbar auf einer Welle 15 gelagertes Zahnrad z30 auf, das mit einem drehfest auf der Getriebeausgangswelle 31 angeordneten Zahnrad z31 kämmt. Das Zahnrad z30 ist entweder über Wellen 14, 15 mit einer Ausgangswelle 12 des mechanischen Schaltgetriebes 10 oder über Wellen 21, ggf. 44, 45 mit dem Hydromotor 7 in Antriebsverbindung bringbar. Durch die bauliche Entkopplung lassen sich die das mechanische Schaltgetriebe 10 aufnehmende Einheit und die das Vorgelegegetriebe 20 bildende Einheit in gewissen Grenzen räumlich unabhängig voneinander an einem Nutzfahrzeug positionieren, so dass eine Verwendung an unterschiedlich gestalteten Fahrzeugen bzw. an Fahrzeugen unterschiedlicher Abmessungen vorteilhaft möglich ist. Dabei muss gewährleistet sein, dass eine mechanische Antriebsverbindung - wie hier durch die Gelenkwellenanordnung 12, 14, 15 verwirklicht - zwischen den Einheiten herstellbar ist. Eine daneben notwendige hydraulische Antriebsverbindung zwischen Hydropumpe 6 und Hydromotor 7 stellt angesichts einer weitestgehend flexiblen hydraulischen Leitungsführung hingegen kaum eine gestalterische Einschränkung dar.

Der mechanische Getriebezweig der Getriebeanordnung 1 umfasst im Wesentlichen ein mechanisches Schaltgetriebe 10, das gemäß gezeigtem Ausführungsbeispiel in sechs Vorwärtsgänge (1., 2., 3., 4., 5., 6.) und einen Rückwärtsgang (R) schaltbar ist. Das mechanische Schaltgetriebe 10 weist eine Eingangswelle 11, eine dazu koaxial angeordnete Ausgangswelle 12 sowie eine dazu parallele Zwischenwelle 13 auf. An den Wellen 11, 12, 13 sind zur Erreichung von insgesamt sieben schaltbaren Gangstufen (1., 2., 3., 4., 5., 6., R) Paarungen von hier nicht näher zu erläuternden Zahnrädern angeordnet, die durch Betätigung zugehöriger Schalteinrichtungen 16, 17, 18, 19 eine Antriebsverbindung von der Eingangswelle 11 - zumeist über die Zwischenwelle 13 - auf die Ausgangswelle 12 herstellen. Im Zustand einer eingelegten Getriebegangstufe (1., 2., 3., 4., 5., 6., R) ist die Drehzahl der Ausgangswelle 12 in einem jeweils (abhängig von der gewählten Getriebegangstufe) unveränderlichen Übersetzungsverhältnis gekoppelt an die vom Antriebsmotor 2 vorgegebene Drehzahl der Eingangswelle 11. Das Übersetzungsverhältnis lässt sich durch Wahl einer anderen Getriebegangstufe (1., 2., 3., 4., 5., 6., R) verändern. Die Ausgangswelle 12 stellt eine Abtriebswelle des mechanischen Schaltgetriebes 10 dar.

Der hydraulische Getriebezweig der Getriebeanordnung 1 umfasst im Wesentlichen ein hydraulisches Getriebe, das im gezeigten Ausführungsbeispiel aus einer Hydropumpe 6 und einem damit hydraulisch verbundenen Hydromotor 7 besteht. Es handelt sich bei Pumpe 6 und Motor 7 jeweils um hydrostatische Einheiten mit veränderlichem Förder- bzw. Schluckvolumen, so dass sich - auf für sich bekannte Weise - durch stufenloses Ändern eines Ölflusses (konkret: Änderung des Förder- und/oder Schluckvolumens) zwischen Hydropumpe 6 und Hydromotor 7 eine Getriebeübersetzung stufenlos einstellen lässt. Dabei ist die Hydropumpe 6 vom Antriebsmotor 2 über ein von der Eingangswelle 11 der Getriebeanordnung 10 angetriebenes Verteilgetriebe 4 und eine Kupplung 5 antreibbar. Die Hydropumpe 6 überträgt gewandelte Antriebsleistung mittels einer (nicht dargestellten) hydraulischen Leitung auf den Hydromotor 7. Abhängig vom jeweils eingestellten Schluck- bzw. Fördervolumen an Hydropumpe 6 bzw. Hydromotor 7 ist somit die Drehzahl einer vom Hydromotor 7 angetriebenen Welle 21 gekoppelt an die vom Antriebsmotor 2 vorgegebene Drehzahl der Eingangswelle 11. Anders als im mechanischen Getriebezweig lässt sich die Drehzahl der Welle 21 stufenlos verändern, indem an Hydropumpe 6 und/oder Hydromotor 7 das Förder- bzw. Schluckvolumen verändert wird.

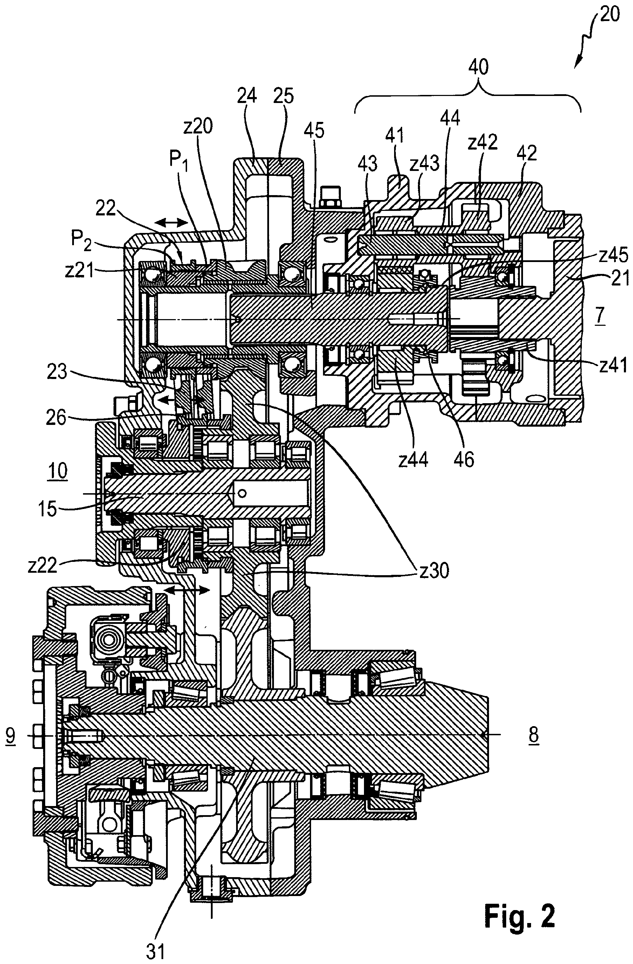

Die in Fig. 1 gezeigte Getriebeanordnung 1 zeichnet sich aus durch eine Kupplungsanordnung, mit der sich ausschließlich entweder die Abtriebswelle 12 des mechanischen Getriebezweigs oder die Abtriebswelle 21 des hydraulischen Getriebezweigs mit der Getriebeausgangswelle 31 in Antriebsverbindung bringen lässt. Eine nähere Erläuterung des Aufbaus und der Funktion dieser Kupplungsanordnung erfolgt anhand von Fig. 2.

Fig. 2 zeigt in einer Schnittdarstellung einen wesentlichen Teil, nämlich das Vorgelegegetriebe 20 der in Fig. 1 schematisch dargestellten Getriebeanordnung 1.

Das als eigene baulichen Einheit ausgeführte Vorgelegegetriebe 20 weist zwei miteinander verbundene Gehäuseelemente 24, 25 auf, wobei an das Gehäuseelement 25 ein Gehäuseelement 41 eines (optionalen) Kriechganggetriebes 40 angeflanscht ist. Ein weiteres Gehäuseelement 42 des Kriechganggetriebes 40 ist an das Gehäuseelement 41 angeflanscht und dient unter anderem zur Aufnahme des Hydromotors 7 (nur teilweise dargestellt). Der Hydromotor 7 treibt über eine Welle 21 ein darauf angeordnetes Zahnrad z41 an. Das Zahnrad z41 sowie weitere Zahnräder z42, z43, z44, z45 mitsamt zugehöriger Wellen 44, 45 und einer Schaltmuffe 46 bilden wesentliche funktionale Elemente des Kriechganggetriebes 40. Dabei ist die Welle 45 koaxial zur Welle 21 angeordnet. Das an der Welle 45 ausgebildete Rad z45 lässt sich mittels der axial verschiebbaren Schaltmuffe 46 wahlweise in formschlüssige Verbindung bringen mit einem axialen Abschnitt des Zahnrads z41 oder mit einem axialen Abschnitt des Zahnrads z44. Das Zahnrad z41 kämmt mit dem Zahnrad z42, das auf einer parallel zu den Wellen 21, 45 verlaufenden Hohlwelle 44 angeordnet ist. Die Hohlwelle 44 ist auf einer gehäusefesten Achse 43 drehbar gelagert. Das ebenfalls auf der Hohlwelle 44 angeordnete Zahnrad z43 kämmt mit dem Zahnrad z44. Das Zahnrad z44 ist mittels eines Nadellagers drehbar (Losrad) gegenüber der Welle 45 gelagert. Durch axiales Verschieben der Schaltmuffe 46, die im Wesentlichen ein innenverzahnter Metallring ist, verbindet die auf dem Rad z45 verschiebbare Schaltmuffe 46 das Rad z45 - somit die Welle 45 - entweder mit dem fest an der Welle 21 angeordneten Zahnrad z41 oder mit dem Zahnrad z44. Im erst genannten Fall sind die Wellen 21 und 45 mittels der Schaltmuffe 46 drehfest miteinander verbunden und weisen folglich eine identische Drehzahl auf. Das Kriechganggetriebe 40 ist somit nicht aktiv. Im anderen Fall besteht zwischen den Wellen 21 und 45 keine formschlüssige Verbindung. Stattdessen besteht von der Welle 21 ausgehend eine Antriebsverbindung über die Zahnradpaarung z41, z42 auf die Hohlwelle 44 und von dort über die Zahnradpaarung z43, z44 auf die Welle 45, die in diesem Fall (über das Rad z45 und die Schaltmuffe 46) drehfest mit dem Zahnrad z44 verbunden ist. Abhängig von den Übersetzungsverhältnissen der Zahnradpaarungen z41, z42; z43, z44 ergibt sich zwischen der Welle 21 und der Welle 45 nun ein Übersetzungsverhältnis, welches die Welle 45 gegenüber der Welle 21 mit deutlich reduzierter Drehzahl drehen lässt. Das Kriechganggetriebe 40 ist in diesem Fall aktiv.

Somit lässt sich dem hydraulischen Getriebezweig ein Kriechganggetriebe 40 zuschalten, das eine an der Abtriebswelle 21 des Hydromotors 7 anliegende Drehzahl im zugeschalteten Zustand auf eine demgegenüber verringerte Drehzahl einer Ausgangswelle 45 reduziert oder - im nicht aktiven Zustand - die Drehzahl der Abtriebswelle 21 identisch auf die Welle 45 überträgt.

Je nach Verwendungszweck lässt sich das in Fig. 2 gezeigte Vorgelegegetriebe 20 auch ohne das Kriechganggetriebe 40 verwenden. Zu diesem Zweck ist das Kriechganggetriebe 40 als eine montagefähige Baueinheit ausgeführt, die sich an das Gehäuseelement 25 anbauen lässt und an die der Hydromotor 7 anbaubar ist, um Teil des Vorgelegegetriebes 20 zu sein. Soll das Vorgelegegetriebe 20 ohne Kriechganggetriebe 40 genutzt werden, so lässt sich der Hydromotor 7 unmittelbar an das Gehäuseelement 25 anbauen. Statt der Welle 45 kommt in diesem Fall eine entsprechende kürzere Welle (nicht dargestellt) zum Einsatz.

Das in Fig. 2 gezeigte Vorgelegegetriebe 20 beinhaltet als erfindungswesentliches Merkmal eine Kupplungsanordnung, mit welcher sich wahlweise die Abtriebswelle 12 des mechanischen Getriebezweigs (Schaltgetriebe 10) - in Fig. 2 ist aus Darstellungsgründen nur die damit über die Gelenkwelle 14 (vgl. Fig. 1) verbundene Eingangswelle 15 zu sehen - oder die Abtriebswelle 45 des hydraulischen Getriebezweigs mit der Getriebeausgangswelle 31 in Antriebsverbindung bringen lässt. Die Kupplungsanordnung umfasst eine dem mechanischen Getriebezweig zugeordnete Kupplung, bestehend im Wesentlichen aus einer Schaltmuffe 26 und zwei Zahnrädern z22, z30, sowie eine dem hydraulischen Getriebezweig zugeordnete Kupplung, bestehend im Wesentlichen aus einer Schaltmuffe 22 und zwei Zahnrädern z20, z21.

Die beiden so gebildeten Kupplungen lassen sich gemeinsam betätigen. Dazu ist den Kupplungen eine gemeinsame Betätigungseinrichtung in Form einer zwischen zwei Positionen P₁, P₂ verschiebbaren Doppelschaltgabel 23 zugeordnet.

Die über den mechanischen Antriebszweig antreibbare Welle 15 und die über den hydraulischen Antriebszweig antreibbare Welle 45 sind parallel zueinander angeordnet. Die Doppelschaltgabel 23 ist bezogen auf die Wellen 15, 45 in axialer Richtung zwischen zwei Positionen P₁, P₂ verschiebbar, wie in Fig. 2 zeichnerisch angedeutet. Dabei ist in einer ersten Position P₁ der Doppelschaltgabel 23 die Kupplung 22, z20, z21 des hydraulischen Getriebezweigs geschlossen und die Kupplung 26, z22, z30 des mechanischen Getriebezweigs geöffnet, während in einer zweiten Position P₂ der Doppelschaltgabel 23 die Kupplung 22, z20, z21 des hydraulischen Getriebezweigs geöffnet und die Kupplung 26, z22, z30 des mechanischen Getriebezweigs geschlossen ist.

Das Kuppeln erfolgt mit Hilfe zweier an der Doppelschaltgabe 23 angeordneter Schaltmuffen 22, 26. Mit diesen wird eine formschlüssige Verbindung zwischen entweder der Welle 15 und dem Getriebeabtrieb 31, oder der Welle 45 und dem Getriebeabtrieb 31 hergestellt. Insbesondere lässt sich mit einer Schaltmuffe 22, 26 jeweils eine formschlüssige Verbindung zwischen einem drehfest auf der jeweiligen Welle 15, 45 angeordneten Rad z21, z22 und einem dazu koaxialen Zahnrad z20, z30 herstellen.

In der ersten Position P₁ der Doppelschaltgabel 23 befindet sich die Schaltmuffe 22 in einer Position, in welcher die Schaltmuffe 22 sowohl mit dem Rad z21 als auch mit einem an dem Zahnrad z20 ausgebildeten axialen Abschnitt in Eingriff steht, so dass die Zahnräder z21, z20 drehfest miteinander verbunden sind. Damit wird Antriebsleistung über die Welle 45 auf das Zahnrad z20 übertragen. Zugleich bewirkt die Doppelschaltgabel 23, dass sich in deren erster Position P₁ die Schaltmuffe 26 in einer Position befindet, in welcher die Schaltmuffe 26 mit einem an dem Zahnrad z30 ausgebildeten axialen Abschnitt in Eingriff steht, jedoch nicht in Eingriff steht mit dem Rad z22. Demzufolge besteht in der ersten Position P₁ keine Antriebsverbindung zwischen dem Rad z22 und dem Zahnrad z30.

Im Ergebnis wird im Schaltzustand P₁ der Doppelschaltgabel 23 bewirkt, dass im Vorgelegegetriebe 20 ausschließlich eine Antriebsverbindung besteht über die Welle 45, das Zahnrad z20, das (gegenüber der Welle 15 frei drehbare) Zahnrad z30 auf die Getriebeausgangswelle 31.

In der zweiten Position P₂ der Doppelschaltgabel 23 befindet sich die Schaltmuffe 22 in einer Position, in welcher die Schaltmuffe 22 mit dem Rad z21 in Eingriff steht, jedoch nicht in Eingriff steht mit dem Zahnrad z20. Demzufolge besteht in der zweiten Position P₂ keine Antriebsverbindung zwischen dem Rad z21 und dem Zahnrad z20. Zugleich bewirkt die Doppelschaltgabel 23, dass sich in deren zweiter Position P₂ die Schaltmuffe 26 in einer Position befindet, in welcher die Schaltmuffe 26 sowohl mit einem an dem Zahnrad z30 ausgebildeten axialen Abschnitt als auch mit dem Rad z22 in Eingriff steht, so dass die Zahnräder z22, z30 drehfest miteinander verbunden sind. Damit wird Antriebsleistung über die Welle 15, das Rad z22, die Schaltmuffe 26 auf das Zahnrad z30 übertragen.

Im Ergebnis wird im Schaltzustand P₂ der Doppelschaltgabel 23 bewirkt, dass im Vorgelegegetriebe 20 ausschließlich eine Antriebsverbindung besteht über die Welle 15, das Rad z22, das (nun fest gegenüber der Welle 15 geschaltete) Zahnrad z30 auf die Getriebeausgangswelle 31.

In vorteilhafter Weise gewährleistet die so beschriebene Kupplungsanordnung, dass abhängig von der Stellung der Doppelschaltgabel 23 jeweils ausschließlich entweder die Welle 15 des mechanischen Getriebezweigs oder die Welle 45 des hydraulischen Getriebezweigs mit der Getriebeausgangswelle 31 in Antriebsverbindung bringen lässt. Fehlschaltungen, die zu einer Beschädigung von Antriebskomponenten führen könnten, werden somit auf sichere Weise, nämlich ohne die Notwendigkeit einer gesonderten Schaltsperre, vermieden.

Indem die Getriebeanordnung eine Nutzung zweier unterschiedlicher Antriebskonzepte durch sicheres Umschalten gewährleistet, können die Vorteile einerseits einer stufenlos einstellbaren Abtriebsgeschwindigkeit (hydraulischer Betrieb), andererseits eines hohen Wirkungsgrads (mechanischer Betrieb) auf verbesserte Weise genutzt werden. Dabei erfolgt bei hydraulischem Fahrbetrieb auf vorteilhafte Weise kein zwangsweiser Mitantrieb der Ausgangswelle des mechanischen Getriebezweigs, so dass sich für die hydraulische Betriebsart eine erhöhte Leistungseffizienz ergibt. Weiterhin zeichnet sich der Aufbau des Vorgelegegetriebes durch eine kompakte Bauform aus, weshalb sich die Getriebeanordnung auf besondere Weise für den Einbau an einem kommunalen Nutzfahrzeug eignet, das in der Regel beschränkte Bauraumverhältnisse aufweist.

### Bezugszeichenliste

- 1: Getriebeanordnung
- 2: Antriebsmotor
- 3: Hauptkupplung
- 4: Verteilgetriebe
- 5: Kupplung
- 6: Hydropumpe
- 7: Hydromotor
- 8: Hinterachsgetriebe
- 9: Vorderachsgetriebe
- 10: mechanisches Schaltgetriebe
- 11: Eingangswelle
- 12: Ausgangswelle
- 13: Zwischenwelle
- 14: Gelenkwelle
- 15: Eingangswelle mechanischer Antriebszweig
- 16: Schalteinrichtung
- 17: Schalteinrichtung
- 18: Schalteinrichtung
- 19: Schalteinrichtung
- 20: Vorgelegegetriebe
- 21: Eingangswelle
- 22: Schaltmuffe
- 23: Doppelschaltgabel
- 24: Gehäuseelement
- 25: Gehäuseelement
- 26: Schaltmuffe

- 30: Radantrieb
- 31: Getriebeausgangswelle
- 32: Gelenkwellenanordnung

- 40: Kriechganggetriebe
- 41: Gehäuseelement
- 42: Gehäuseelement
- 43: Achse
- 44: Hohlwelle
- 45: Ausgangswelle
- 46: Schaltmuffe

- z20: Zahnrad
- z21: Rad
- z22: Rad
- z30: Zahnrad
- z31: Zahnrad
- z41: Zahnrad
- z42: Zahnrad
- z43: Zahnrad
- z44: Zahnrad
- z45: Rad

## Patentansprüche

1. Getriebeanordnung (1) für ein Nutzfahrzeug, umfassend einen Getriebeeingang (11), einen mechanischen Getriebezweig mit einem mechanischen Schaltgetriebe (10), einen hydraulischen Getriebezweig mit einem hydraulischen Getriebe (6, 7) und einen Getriebeausgang (31), wobei der Getriebeeingang (11) mit dem Getriebeausgang (31) über den mechanischen Getriebezweig oder über den hydraulischen Getriebezweig in Antriebsverbindung bringbar ist, **dadurch gekennzeichnet, dass** eine Kupplungsanordnung (22, z20, z21, 23, 26, z22, z30), mit der sich ausschließlich entweder eine Abtriebswelle (12) des mechanischen Getriebezweigs oder eine Ausgangswelle (45) des hydraulischen Getriebezweigs mit dem Getriebeausgang (31) in Antriebsverbindung bringen lässt, wobei sich dem hydraulischen Getriebezweig ein Kriechganggetriebe (40) zuschalten lässt, das eine an der Abtriebswelle (21) des Hydromotors (7) anliegende Drehzahl im zugeschalteten Zustand auf eine demgegenüber verringerte Drehzahl einer Ausgangswelle (45) reduziert.

2. Getriebeanordnung nach Anspruch 1, **dadurch gekennzeichnet, dass** die Kupplungsanordnung (22, z20, z21, 23, 26, z22, z30) eine der Abtriebswelle (12) des mechanischen Getriebezweigs zugeordnete Kupplung (26, z22, z30) und eine der Abtriebswelle (45) des hydraulischen Getriebezweigs zugeordnete Kupplung (22, z20, z21) umfasst, wobei sich die Kupplungen gemeinsam betätigen lassen.

3. Getriebeanordnung nach Anspruch 2, **dadurch gekennzeichnet, dass** den Kupplungen (22, z20, z21, 26, z22, z30) eine gemeinsame Betätigungseinrichtung, insbesondere eine zwischen zwei Positionen (P₁, P₂) verschiebbare Doppelschaltgabel (23) zugeordnet ist, wobei in einer ersten Position (P₁) der Betätigungseinrichtung (23) die Kupplung (22, z20, z21) des hydraulischen Getriebezweigs geschlossen und die Kupplung (26, z22, z30) des mechanischen Getriebezweigs geöffnet ist, und wobei in einer zweiten Position (P₂) der Betätigungseinrichtung (23) die Kupplung (22, z20, z21) des hydraulischen Getriebezweigs geöffnet und die Kupplung (26, z22, z30) des mechanischen Getriebezweigs geschlossen ist.

4. Getriebeanordnung nach einem der vorigen Ansprüche, **dadurch gekennzeichnet, dass** eine über den mechanischen Antriebszweig antreibbare Welle (15) und eine über den hydraulischen Antriebszweig antreibbare Welle (45) parallel zueinander angeordnet sind, wobei die gemeinsame Betätigungseinrichtung (23) bezogen auf die Wellen (15, 45) in axialer Richtung verschiebbar ist, um mittels an der Betätigungseinrichtung (23) angeordneter Eingriffselemente (22, 26) eine formschlüssige Verbindung zwischen entweder der Welle (15) und dem Getriebeabtrieb (31), oder der Welle (45) und dem Getriebeabtrieb (31) herzustellen.

5. Getriebeanordnung nach Anspruch 4, **dadurch gekennzeichnet, dass** es sich bei einem Eingriffselement jeweils um eine axial verschiebbare Schaltmuffe (22, 26) handelt, mit der sich eine formschlüssige Verbindung zwischen einem drehfest auf der jeweiligen Welle (15, 45) angeordneten Rad (z21, z22) und einem dazu koaxialen Zahnrad (z20, z30), das mit dem Getriebeabtrieb (31) antriebsverbunden ist, herstellen lässt.

6. Getriebeanordnung nach einem der vorigen Ansprüche, **dadurch gekennzeichnet, dass** das mechanische Schaltgetriebe (10) in eine Vielzahl von Gangstufen mit unterschiedlicher Übersetzung schaltbar ist, während das hydraulische Getriebe (6, 7) eine stufenlos veränderliche Übersetzung aufweist.

7. Getriebeanordnung nach einem der vorigen Ansprüche, **dadurch gekennzeichnet, dass** diese durch zwei baulich voneinander entkoppelte Einheiten gebildet wird, wobei eine erste Einheit das Schaltgetriebe (10) sowie eine Hydropumpe (6) aufnimmt und eine zweite Einheit (20) die Kupplungsanordnung (22, z20, z21, 23, 26, z22, z30), einen mit der Hydropumpe (6) antriebsverbundenen Hydromotor (7) sowie zumindest ein Zahnrad (z30) des Getriebeausgangs (31) aufnimmt, das entweder über Wellen (14, 15) mit einer Ausgangswelle (12) des Schaltgetriebes (10) oder über Wellen (21, 44, 45) mit dem Hydromotor (7) in Antriebsverbindung bringbar ist.

8. Getriebeanordnung nach Anspruch 1, **dadurch gekennzeichnet, dass** das Kriechganggetriebe (40) als eine montagefähige Baueinheit ausgeführt ist, an die der Hydromotor (7) anbaubar ist und die sich an ein die Kupplungsanordnung (22, z20, z21, 23, 26, z22, z30) zumindest teilweise aufnehmendes Gehäuseelement (25) anbauen lässt, um Teil der zweiten baulichen Einheit (20) zu sein.

9. Kommunales oder landwirtschaftliches Nutzfahrzeug mit einem Fahrantriebsstrang, der eine Getriebeanordnung (1) nach einem der vorigen Ansprüche aufweist.

## Claims

1. A transmission arrangement (1) for a utility vehicle, including a transmission input (11), a mechanical transmission path having a mechanical shift transmission (10), a hydraulic transmission path having a hydraulic transmission (6, 7) and a transmission output (31), wherein the transmission input (11) can be brought into driving connected relationship with the transmission output (31) by way of the mechanical transmission path or by way of the hydraulic transmission path, **characterised in that** there is provided a clutch arrangement (22, z20, z21, 23, 26, z22, z30) with which exclusively either a drive output shaft (12) of the mechanical transmission path or an output shaft (45) of the hydraulic transmission path can be brought into driving connected relationship with the transmission output (31), wherein a crawler transmission (40) can be switched to the hydraulic transmission path, which crawler transmission (40) in the switched condition reduces a rotary speed at the drive output shaft (21) of the hydraulic motor (7) to a rotary speed which is reduced in relation thereto of an output shaft (45).

2. A transmission arrangement according to claim 1 **characterised in that** the clutch arrangement (22, z20, z21, 23, 26, z22, z30) includes a clutch (26, z22, z30) associated with the drive output shaft (12) of the mechanical transmission path and a clutch (22, z20, z21) associated with the drive output shaft (45) of the hydraulic transmission path, wherein the clutchs can be jointly actuated.

3. A transmission arrangement according to claim 2 **characterised in that** associated with the clutchs (22, z20, z21, 26, z22, z30) is a common actuating device, in particular a double shift fork (23) displaceable between two positions (P₁, P₂), wherein in a first position (P₁) of the actuating device (23) the clutch (22, z20, z21) of the hydraulic transmission path is closed and the clutch (26, z22, z30) of the mechanical transmission path is opened, and wherein in a second position (P₂) of the actuating device (23) the clutch (22, z20, z21) of the hydraulic transmission path is opened and the clutch (26, z22, z30) of the mechanical transmission path is closed.

4. A transmission arrangement according to one of the preceding claims **characterised in that** a shaft (15) drivable by way of the mechanical drive path and a shaft (45) drivable by way of the hydraulic drive path are arranged parallel to each other, wherein the common actuating device (23) is displaceable in the axial direction with respect to the shafts (15, 45) in order to produce a positively locking connection between either the shaft (15) and the transmission drive output (31) or the shaft (45) and the transmission drive output (31) by means of engagement elements (22, 26) arranged at the actuating device (23).

5. A transmission arrangement according to claim 4 **characterised in that** an engagement element is respectively an axially displaceable shift collar (22, 26) with which a positively locking connection can be made between a gear (z21, z22) non-rotatably arranged on the respective shaft is (15, 45) and a gear (z20, z30) which is coaxial therewith and which drivingly connected to the transmission drive output (31).

6. A transmission arrangement according to one of the preceding claims **characterised in that** the mechanical shift transmission (10) can be shifted into a plurality of gears involving a different transmission ratio, while the hydraulic transmission (6, 7) has a steplessly variable transmission ratio.

7. A transmission arrangement according to one of the preceding claims **characterised in that** it is formed by two units which are structurally uncoupled from each other, wherein a first unit accommodates the shift transmission (10) and a hydraulic pump (6) and a second unit (20) accommodates the clutch arrangement (22, z20, z21, 23, 26, z22, z30), a hydraulic motor (7) drivingly connected to the hydraulic pump (6) and at least one gear (z30) of the transmission output (31), which can be brought into driving connected relationship either by way of shafts (14, 15) with an output shaft (12) of the shift transmission (10) or by way of shafts (21, 44, 45) with the hydraulic motor (7).

8. A transmission arrangement according to claim 1 **characterised in that** the crawler transmission (40) is in the form of a unit which can be fitted in place and to which the hydraulic motor (7) can be fitted and which can be fitted to a housing element (25) at least partially accommodating the clutch arrangement (22, z20, z21, 23, 26, z22, z30) to be a part of the second structural unit (20).

9. An urban or agricultural utility vehicle having a drive train having a transmission arrangement (1) according to one of the preceding claims.

## Revendications

1. Agencement de transmission (1) pour un véhicule utilitaire, comprenant une entrée de transmission (11), une branche de transmission mécanique avec une boîte de vitesses mécanique (10), une branche de transmission hydraulique avec un réducteur hydraulique (6, 7), et une sortie de transmission (31), l'entrée de transmission (11) pouvant être amenée en liaison d'entraînement avec la sortie de transmission (31) par l'intermédiaire de la branche de transmission mécanique ou par l'intermédiaire de la branche de transmission hydraulique, **caractérisé en ce que** un agencement d'accouplement (22, z20, z21, 23, 26, z22, z30), avec lequel uniquement soit un arbre mené (12) de la branche de transmission mécanique, soit un arbre de sortie (45) de la branche de transmission hydraulique peut être amené en liaison d'entraînement avec la sortie de transmission (31), à la branche de transmission hydraulique pouvant être raccordée une transmission de vitesse lente (40) qui, à l'état raccordé, réduit une vitesse de rotation présente sur l'arbre mené (21) du moteur hydraulique (7) à une vitesse de rotation d'un arbre de sortie (45) comparativement inférieure.

2. Agencement de transmission selon la revendication 1, **caractérisé en ce que** l'agencement d'accouplement (22, z20, z21, 23, 26, z22, z30) comprend un accouplement (26, z22, z30) associé à l'arbre mené (12) de la branche de transmission mécanique et un accouplement (22, z20, z21) associé à l'arbre mené (45) de la branche de transmission hydraulique, les accouplements pouvant être actionnés conjointement.

3. Agencement de transmission selon la revendication 2, **caractérisé en ce qu'**aux accouplements (22, z20, z21, 23, 26, z22, z30) est associé un dispositif d'actionnement conjoint, en particulier une double fourchette de commande (23) apte à coulisser entre deux positions (P₁, P₂), dans une première position (P₁) du dispositif d'actionnement (23) l'accouplement (22, z20, z21) de la branche de transmission hydraulique étant fermé et l'accouplement (26, z22, z30) de la branche de transmission mécanique étant ouvert, et dans une seconde position (P₂) du dispositif d'actionnement (23) l'accouplement (22, z20, z21) de la branche de transmission hydraulique étant ouvert et l'accouplement (26, z22, z30) de la branche de transmission mécanique étant fermé.

4. Agencement de transmission selon une des revendications précédentes, **caractérisé en ce qu'**un arbre (15) entraînable par l'intermédiaire de la branche d'entraînement mécanique et un arbre (45) entraînable par l'intermédiaire de la branche d'entraînement hydraulique (45) sont disposés parallèlement l'un à l'autre, le dispositif d'actionnement conjoint (23) pouvant coulisser dans la direction axiale par rapport aux arbres (15, 45) afin de réaliser, au moyen d'éléments d'engagement (22, 26) disposés sur le dispositif d'actionnement (23), une liaison par conjugaison de formes entre soit l'arbre (15) et la sortie de transmission (31), soit l'arbre (45) et la sortie de transmission (31).

5. Agencement de transmission selon la revendication 4, **caractérisé en ce que** chaque élément d'engagement est constitué par un manchon de commande mobile axialement (22, 26) qui permet de réaliser une liaison par conjugaison de formes entre une roue (z21, z22) solidarisée en rotation sur l'arbre correspondant (15, 45) et une roue dentée (z20, z30) qui est coaxiale à celle-ci et qui est liée en entraînement à la sortie de transmission (31).

6. Agencement de transmission selon une des revendications précédentes, **caractérisé en ce que** la boîte de vitesses mécanique (10) peut adopter une pluralité de rapports avec des multiplications différentes, tandis que le réducteur hydraulique (6, 7) présente une multiplication variable progressivement.

7. Agencement de transmission selon une des revendications précédentes, **caractérisé en ce qu'**il est formé par deux unités structurellement découplées l'une de l'autre, une première unité englobant la boîte de vitesses (10) ainsi qu'une pompe hydraulique (6), et une seconde unité (20) englobant l'agencement d'accouplement (22, z20, z21, 23, 26, z22, z30), un moteur hydraulique (7) lié en entraînement à la pompe hydraulique (6) ainsi qu'au moins une roue dentée (z30) de la sortie de transmission (31), laquelle roue dentée peut être amenée en liaison d'entraînement soit avec l'arbre de sortie (12) de la boîte de vitesses (10) par l'intermédiaire d'arbres (14, 15), soit avec le moteur hydraulique (7) par l'intermédiaire d'arbres (21, 44, 45).

8. Agencement de transmission selon la revendication 1, **caractérisé en ce que** la transmission de vitesse lente (40) est conformée en unité structurelle prête à la pose, sur laquelle le moteur hydraulique (7) peut être monté et qui peut être montée sur un élément de carter (25) recevant au moins partiellement l'agencement d'accouplement (22, z20, z21, 23, 26, z22, z30) afin de faire partie de la seconde unité structurelle (20).

9. Véhicule utilitaire communal ou agricole comprenant une chaîne de transmission qui comporte un agencement de transmission (1) selon une des revendications précédentes.
